# EUROPÄISCHE PATENTSCHRIFT

(11) **EP 3 381 261 B1**
(45) Veröffentlichungstag und Bekanntmachung des Hinweises auf die Patenterteilung: **23.10.2024**
(21) Anmeldenummer: 18155545.9
(22) Anmeldetag: 07.02.2018
(51) Int. Cl.: A01D 34/82

(54) **BODENBEARBEITUNGSGERÄT**
SOIL CULTIVATION DEVICE
APPAREIL DE TRAVAIL DU SOL

(30) Priorität: 29.03.2017 DE 102017205311
(43) Veröffentlichungstag der Anmeldung: 03.10.2018
(73) Patentinhaber: Robert Bosch GmbH, 70442 Stuttgart (DE)
(72) Erfinder: Aristidou, Andrew, Suffolk, IP6 8QR (GB)

(56) Entgegenhaltungen:
- EP-A1- 2 465 337
- CN-A- 103 283 374
- US-A1- 2015 101 301

## Beschreibung

### Stand der Technik

In der CN 103283374 A ist ein Rasenmäher mit einer teleskopartigen Führungsstange, die schwenkbar mit dem Gehäuse des Rasenmähers verbunden ist, beschrieben. Ferner wird auf die Druckschrift EP 2 465 337 A1 verwiesen.

### Offenbarung der Erfindung

Die Erfindung betrifft ein handgeführtes Bodenbearbeitungsgerät mit den Merkmalen des Anspruchs 1. Vorteilhafte Weiterbildungen ergeben sich aus den abhängigen Ansprüchen.

Unter einem Bodenbearbeitungsgerät soll insbesondere ein Gartengerät verstand werden, dass bei der Arbeit im Garten oder in Parkanlagen verwendet wird. Das Bodenbearbeitungsgerät weist vorzugsweise einen Motor auf, der als Elektromotor oder als Verbrennungsmotor ausgebildet sein kann. Der Elektromotor kann dabei über einen Netzanschluss oder mittels einer integrierten Energieversorgung wie einer Batterie oder einem wechselbaren Akkupack mit Energie versorgt werden. Der Motor des Bodenbearbeitungsgeräts ist zumindest teilweise im Gehäuse aufgenommen. Bevorzugt weist das Gehäuse ein Fahrgestell auf, an dem zumindest zwei Räder drehbar gelagert sein können und mittels derer das Bodenbearbeitungsgerät über den Boden bewegt werden kann. Mit dem Gehäuse ist eine Führungsvorrichtung verbunden, die einen Handgriff aufweist. Bei der Benutzung des Bodenbearbeitungsgeräts kann das Bodenbearbeitungsgerät am Handgriff gegriffen und über die Führungsvorrichtung geführt werden. Durch die teleskopartige Führung der Führungsglieder ineinander kann die Höhe des Handgriffs nutzerspezifisch angepasst werden. Die Führungsvorrichtung erstreckt sich ausgehend vom Gehäuse insbesondere schräg in die Höhe. Die Führungsvorrichtung ist über die Schwenkeinheit schwenkbar um eine Schwenkachse an dem Gehäuse des Bodenbearbeitungsgeräts gelagert. Durch die Schwenkeinheit kann die Führungsvorrichtung zum platzsparenden Verstauen des Bodenbearbeitungsgeräts insbesondere von einer sich schräg in die Höhe erstreckenden Position in eine parallel zu der Längserstreckung des Bodenbearbeitungsgeräts erstreckende Position geschwenkt werden. Über die Fixiereinheit ist die Höhe der Führungsvorrichtung einstellbar. Die Fixiereinheit ist insbesondere derart am ersten Führungsglied angeordnet, dass die Bewegung des ersten Führungsglieds mit der Bewegung der Fixiereinheit gekoppelt ist. Die Fixiereinheit und der Handgriff sind insbesondere an gegenüberliegenden Endbereichen des ersten Führungsglieds angeordnet.

Des Weiteren wird vorgeschlagen, dass die Schwenkeinheit eine betätigbare Sicherungsvorrichtung aufweist, die in einem unbetätigten Zustand bzw. verriegelten Zustand ein Schwenken der Führungsvorrichtung gegenüber dem Gehäuse verhindert. Vorteilhaft kann dadurch ein unbeabsichtiges Schwenken der Führungsvorrichtung verhindert werden. Die Sicherungsvorrichtung ist insbesondere über eine Bewegung des ersten Führungsglieds betätigbar. Im unbetätigten Zustand der Sicherungsvorrichtung ist die Anzahl an Freiheitsgraden der Schwenkeinheit um zumindest einen Freiheitsgrad eingeschränkt. Bevorzugt ist die Schwenkeinheit im Wesentlichen als ein Drehgelenk ausgebildet, wobei im unbetätigten Zustand der Sicherungsvorrichtung ein rotatorischer Freiheitsgrad des Drehgelenks blockiert ist. Im betätigten Zustand der Sicherungsvorrichtung wird zumindest ein rotatorischer Freiheitsgrad in zumindest eine Richtung freigegeben.

Weiterhin wird vorgeschlagen, dass das erste Führungsglied ein Entriegelungselement aufweist, das dazu ausgebildet ist, die Sicherungsvorrichtung des zweiten Führungsglieds zu betätigen. Vorteilhaft kann dadurch auf einfache Weise durch eine Relativbewegung der beiden Führungsglieder zueinander die Sicherungsvorrichtung betätigt werden. Das zumindest eine Entriegelungselement ist insbesondere zumindest teilweise auf der Außenfläche der Führungsvorrichtung angeordnet.

Zudem wird vorgeschlagen, dass das Entriegelungselement der Fixiereinheit zugeordnet, insbesondere von einem Fixiergehäuse der Fixiereinheit gebildet, ist. Dies ermöglicht eine besonders kostengünstige Konstruktion der Führungsvorrichtung. Das Entriegelungselement ist vorteilhaft stirnseitig an dem der Schwenkeinheit zugewandten Ende des ersten Führungsglieds, insbesondere des Fixiergehäuses, angeordnet.

Des Weiteren wird vorgeschlagen, dass die Sicherungsvorrichtung ein federbeaufschlagtes Sicherungselement aufweist, das beweglich entlang der Teleskoprichtung in der Sicherungsvorrichtung gelagert ist und das drehfest mit dem Gehäuse verbindbar ist. Vorteilhaft wird dadurch die Sicherungsvorrichtung im unbetätigten Zustand gehalten. Die Teleskoprichtung entspricht dem translatorischen Freiheitsgrad entlang dem das erste Führungsglied relativ zum zweiten Führungsglied beweglich ist. Bei einer Bewegung in Teleskoprichtung wird das erste Führungsglied insbesondere in Richtung des Gehäuses des Bodenbearbeitungsgeräts bewegt. Bei einer Bewegung entgegen der Teleskoprichtung wird das zweite Führungsglied insbesondere von dem Gehäuse des Bodenbearbeitungsgeräts weg bewegt. Das Sicherungselement wird insbesondere von einem Federelement mit einer Kraft beaufschlagt. Im unbetätigten Zustand ist das Sicherungselement insbesondere derart angeordnet, dass die Führungsvorrichtung durch das Sicherungselement drehfest mit dem Gehäuse des Bodenbearbeitungsgeräts verbunden ist. Im betätigten Zustand wird das Sicherungselement entgegen der Kraft des Federelements insbesondere derart bewegt, dass die Führungsvorrichtung drehbar mit dem Gehäuse des Bodenbearbeitungsgeräts verbunden ist.

Weiterhin wird vorgeschlagen, dass das Sicherungselement über eine Beaufschlagung mit Kraft durch das Entriegelungselement betätigbar ist. Die Kraft durch das Entriegelungselement wirkt insbesondere in Teleskoprichtung auf die Sicherungsvorrichtung.

Zudem wird vorgeschlagen, dass das Sicherungselement zumindest einen Vorsprung aufweist, der in einem Gehäuselagerelement des Bodenbearbeitungsgeräts fixierbar ist. Der zumindest eine Vorsprung erstreckt sich insbesondere senkrecht zu der Teleskoprichtung. Der Vorsprung weist insbesondere einen Kontaktbereich auf, der im verriegelten Zustand im Wesentlichen am Gehäuse, insbesondere am Gehäuselagerelement, des Bodenbearbeitungsgeräts anliegt.

Des Weiteren wird vorgeschlagen, dass der zumindest eine Vorsprung des Sicherungselements und/oder das Gehäuselagerelement des Bodenbearbeitungsgeräts zur Verriegelung bei einer Schwenkbewegung der Führungsvorrichtung und zur Entriegelung bei einer axialen Verlagerung des Sicherungselements ausgebildet sind. Vorteilhaft wird dadurch eine für den Benutzer besonders komfortable Bedienweise der Schwenkeinheit realisiert.

Weiterhin wird vorgeschlagen, dass der Vorsprung des Sicherungselements und/oder das Gehäuseelement des Bodenbearbeitungsgeräts jeweils einen Hinterschnittbereich und einen Gleitbereich aufweisen. Vorteilhaft kann durch einen Hinterschnitt eine besonders sichere Verbindung realisiert werden. Die Hinterschnittbereiche und die Gleitbereiche sind insbesondere im Kontaktbereich des Vorsprungs mit dem Gehäuselagerelement angeordnet. Die Hinterschnittbereiche sind insbesondere dazu ausgebildet, im verriegelten Zustand ein Schwenken der Führungsvorrichtung in zumindest eine Richtung um die Schwenkachse zu blockieren. Die Gleitbereiche sind insbesondere dazu ausgebildet, im entriegelten Zustand eine Schwenkbewegung der Führungsvorrichtung relativ zum Gehäuse in eine Linearbewegung des Sicherungselements zu übersetzen.

Zudem wird vorgeschlagen, dass über eine Kraft auf ein Bedienelement der Fixiereinheit sowohl die Fixiereinheit als auch die Schwenkeinheit betätigbar ist. Vorteilhaft wird durch diese Maßnahme die Bedienung der Führungsvorrichtung weiter verbessert.

Des Weiteren betrifft die Erfindung ein handgeführtes Bodenbearbeitungsgerät, insbesondere einen Rasenmäher, mit einem Gehäuse und mit einer Führungsvorrichtung, wobei die Führungsvorrichtung zwei teleskopartig ineinander geführte Führungsglieder aufweist, wobei das erste Führungsglied einen eine Schalteinheit umfassenden Handgriff aufweist, und wobei die Führungsvorrichtung eine Fixiereinheit mit zumindest zwei gegenüberliegenden Fixierelementen zur lösbaren Fixierung der Führungsglieder miteinander aufweist, wobei die Fixierelemente über eine Betätigung eines Bedienelements bewegbar sind. Es wird vorgeschlagen, dass die Bewegung der Fixierelemente in Richtung einer Freigabeposition und in Richtung einer Fixierungsposition miteinander gekoppelt ist. Vorteilhaft wird dadurch eine besonders leichtgängige Betätigung der Fixiereinheit realisiert.

Die zumindest zwei Fixierelemente liegen sich insbesondere auf einer Geraden senkrecht zur Teleskoprichtung entgegen. Die Fixierelemente sind vorzugsweise senkrecht zur Teleskoprichtung beweglich ausgebildet. Im betätigten Zustand der Fixiereinheit werden die Fixierelemente insbesondere derart bewegt, dass die Fixierung der Führungsglieder aufgehoben wird und das erste Führungsglied relativ zum zweiten Führungsglied entlang der Teleskoprichtung bewegt werden kann. Die Fixierelemente sind über zumindest ein Bauteil, wie beispielsweise dem Bedienelement miteinander derart verbunden, dass die Bewegung der Fixierelemente gekoppelt ist. In diesem Zusammenhang soll unter eine Kopplung insbesondere verstanden werden, dass die Verbindungen sämtlicher Bauteile, über die die Fixierelemente miteinander verbunden sind, als Gelenkverbindungen, beispielsweise Drehgelenke, oder als ineinander verlaufende Führungen, wie beispielsweise Führungskulissen, ausgebildet sind.

Weiterhin wird vorgeschlagen, dass das Bedienelement der Fixiereinheit insbesondere mittig zwischen parallel verlaufenden Rohrelementen der Führungsvorrichtung angeordnet ist. Insbesondere werden das erste Führungsglied und das zweite Führungsglied zumindest abschnittsweise durch die parallel verlaufenden Rohrelemente gebildet. Über die parallel verlaufenden Rohrelemente werden das erste Führungsglied und das zweite Führungsglied ineinander geführt, wobei insbesondere der Rohrdurchmesser der Rohrelemente des ersten Führungsglieds größer ist, als der Rohrdurchmesser der Rohrelemente des zweiten Führungsglieds. Die Rohrelemente des zweiten Führungsglieds können somit von den Rohrelementen des ersten Führungsglieds aufgenommen werden. Vorteilhaft kann das Bedienelement durch die mittige Anordnung sowohl für Links- als auch Rechtshänder gleich komfortabel betätigt werden.

Zudem wird vorgeschlagen, dass die Länge des Bedienelements zumindest einem Drittel des Abstands der Rohrelemente voneinander, insbesondere zumindest zwei Drittel des Abstands der Rohrelemente voneinander, beträgt. Vorteilhaft kann dadurch ein besonders einfach zu bedienendes Bedienelement realisiert werden.

Des Weiteren wird vorgeschlagen, dass die über die Betätigung des Bedienelements wirkende Kraft außermittig übertragen wird. Vorteilhaft kann durch diese Maßnahme die Kraftübertragung auf die Fixierelemente verbessert werden. Die auf das Bedienelement wirkende Kraft wird insbesondere über zumindest zwei Kraftübertragungsbereiche übertragen. Die Kraftübertragungsbereiche sind vorzugsweise symmetrisch von der Mitte des Bedienelements beabstandet, wodurch sichergestellt werden kann, dass das Bedienelement unabhängig von dem Ort, an dem eine Kraft auf das Bedienelement wirkt, ohne ein Verkanten in Teleskoprichtung verschiebbar ist.

Weiterhin wird vorgeschlagen, dass die Fixierelemente derart mit dem Bedienelement verbunden sind, dass die über die Betätigung des Bedienelements wirkende Kraft direkt auf die Fixierelemente übertragen wird. Vorteilhaft kann dadurch eine besonders kostengünstige Fixiereinheit realisiert werden. Insbesondere sind die Fixierelemente zumindest teilweise im Bedienelement gelagert.

Zudem wird vorgeschlagen, dass das Bedienelement der Fixiereinheit eine Führungskulisse, insbesondere eine schräg zu einer Teleskoprichtung verlaufende Führungskulisse, aufweist, die dazu ausgebildet ist, die Fixierelemente zumindest teilweise zu führen. Dadurch kann eine besonders effiziente Übertragung der Kraft auf die Fixierelemente realisiert werden. Es sind diverse Ausbildungen der Führungskulisse denkbar, wie beispielsweise eine gerade Nut, eine schräge Nut, eine kreisringförmige Nut, etc. Es ist alternativ auch denkbar, dass die Führungskulisse an den Fixierelementen angeordnet ist.

Des Weiteren wird vorgeschlagen, dass die Fixierelemente über jeweils zumindest ein Übertragungselement mit dem Bedienelement verbunden sind, sodass die über die Betätigung des Bedienelements wirkende Kraft über das zumindest eine Übertragungselement auf die Fixierelemente übertragen wird. Dadurch wird die Kraftübertragung auf die Fixierelemente weiter verbessert. Die Übertragungselemente sind dabei insbesondere dazu ausgebildet, die translatorische Bewegung des Bedienelements in Teleskoprichtung in eine translatorische Bewegung der Fixierelemente senkrecht zur Teleskoprichtung umzuwandeln.

Weiterhin wird vorgeschlagen, dass das zumindest eine Übertragungselement als ein schwenkbar gelagerter Hebel ausgebildet ist, der zumindest formschlüssig mit dem Fixierelement verbunden ist. Unter einer formschlüssigen Verbindung soll dabei insbesondere ein zumindest teilweises Ineinandergreifen der miteinander verbundenen Bauteile verstanden werden.

Zudem wird vorgeschlagen, dass zwei Übertragungselemente endseitig ineinander geführt sind. Vorteilhaft wird dadurch eine besonders effiziente Kopplung der Fixierelemente realisiert. Insbesondere weisen die Übertragungselemente an zumindest einem Ende eine Führungskulisse auf. Vorzugsweise sind die zwei Übertragungselemente im Bereich der Mitte des Bedienelements ineinander geführt.

Des Weiteren wird vorgeschlagen, dass die Fixiereinheit zumindest ein Rückstellelement aufweist, dass das Bedienelement, das Übertragungselement und/oder das Fixierelement mit einer Rückstellkraft beaufschlagt. Die Rückstellkraft wirkt dabei insbesondere derart, dass die Fixierelemente in Richtung einer Fixierungsposition bewegt beziehungsweise gehalten werden. Vorzugsweise ist das Rückstellelement derart angeordnet, dass die Rückstellkraft entgegen der Teleskoprichtung wirkt.

Weiterhin wird vorgeschlagen, dass die Fixiereinheit ein Fixiergehäuse aufweist, in welchem zumindest die Fixierelemente gelagert sind. Vorteilhaft werden die beweglichen Bauteile der Fixierungseinheit durch das Fixiergehäuse geschützt.

Zudem wird vorgeschlagen, dass im unbetätigten Zustand das Bedienelement bündig mit dem Fixiergehäuse der Fixiereinheit abschließt. Vorteilhaft kann dadurch eine besonders kompakte Fixiereinheit realisiert werden.

Des Weiteren wird vorgeschlagen, dass das erste Führungsglied und/oder das zweite Führungsglied zumindest teilweise im Fixiergehäuse gelagert sind. Vorteilhaft wird dadurch die Führungsvorrichtung zumindest teilweise sicher im Fixiergehäuse gelagert.

Weiterhin betrifft die Erfindung ein handgeführtes Bodenbearbeitungsgerät, insbesondere einen Rasenmäher, mit einem Gehäuse und mit einer Führungsvorrichtung, wobei die Führungsvorrichtung zwei teleskopartig ineinander geführte Führungsglieder aufweist, wobei das erste Führungsglied einen eine Schalteinheit umfassenden Handgriff aufweist und das zweite Führungsglied mit dem Gehäuse verbunden ist. Es wird vorgeschlagen, dass eine Bewegung des ersten Führungsglieds entgegen einer Teleskoprichtung über ein Begrenzungselement begrenzt wird, welches über zumindest einen ersten Befestigungsbereich an dem ersten Führungsglied und über zumindest einen zweiten Befestigungsbereich an dem zweiten Führungsglied und/oder an dem Gehäuse befestigt ist. Vorteilhaft kann dadurch ein besonders kostengünstiger Aufbau des Bodenbearbeitungsgeräts realisiert werden.

Erfindungsgemäß kann über das Begrenzungselement die maximale Höhe der Führungsvorrichtung, beziehungsweise des ersten Führungsglieds, eingestellt werden. Insbesondere wird das erste Führungsglied über das Begrenzungselement am zweiten Führungsglied gegen ein Verlieren gesichert. Das Begrenzungselement wird vorzugsweise derart in den Befestigungsbereichen befestigt, dass die Befestigung nicht werkzeuglos lösbar ist. Die Befestigung des Begrenzungselements in den Befestigungsbereichen erfolgt durch eine kraft- und oder formschlüssige Verbindung. Das Begrenzungselement ist zumindest teilweise, insbesondere zumindest zwischen dem ersten Befestigungsbereich und dem zweiten Befestigungsbereich, flexibel oder elastisch ausgebildet. Vorteilhaft wird das Begrenzungselement dadurch bei einer Bewegung des ersten Führungsglieds relativ zum zweiten Führungsglied ausschließlich bei Erreichen der maximalen Höhe des ersten Führungsglieds mit einer Zugkraft belastet. Insbesondere wird das Begrenzungselement ausschließlich entgegen der Teleskoprichtung mit einer Zugkraft belastet.

Erfindungsgemäß ist das Begrenzungselement als ein flexibles Kabelelement ausgebildet. Unter einem Kabelelement soll in diesem Zusammenhang ein langes, dünnes und biegsam geformtes Metall- oder Kunststoffkabel verstanden werden. Der Querschnitt ist vorteilhaft im Wesentlichen kreisförmig ausgebildet. Es ist beispielsweise denkbar, dass das Kabelelement aus einem Draht, insbesondere einem geflochtenen Draht oder Litze zur Übertragung von Daten und/oder elektrischer Energie besteht.

Des Weiteren wird vorgeschlagen, dass das Führungsglied eine Fixiereinheit zur lösbaren Fixierung der Führungsglieder miteinander aufweist, wobei die Fixiereinheit ein Fixiergehäuse umfasst, in welchem der erste oder der zweite Befestigungsbereich des Begrenzungselements angeordnet ist. Vorteilhaft kann dadurch eine besonders sichere Befestigung erzielt werden.

Weiterhin wird vorgeschlagen, dass der erste Befestigungsbereich im Fixiergehäuse der Fixiereinheit und der zweite Befestigungsbereich im Gehäuse des Bodenbearbeitungsgeräts angeordnet sind.

Zudem wird vorgeschlagen, dass das Begrenzungselement zumindest teilweise in einer Nut im ersten Befestigungsbereich und/oder in einer Nut im zweiten Befestigungsbereich geführt wird. Durch eine Führung in einer Nut kann das Begrenzungselement vorteilhaft sicher im Befestigungsbereich geführt werden. Unter einer Nut soll in diesem Zusammenhang insbesondere eine Vertiefung im Material oder ein schmaler Kanal, insbesondere ein Kabelkanal, verstanden werden. Der Durchmesser der Nut entspricht im Wesentlichen dem Durchmesser des Begrenzungselements. Alternativ kann die Nut auch geringfügig kleiner sein, um einen Klemmeffekt zu erzielen.

Des Weiteren wird vorgeschlagen, dass das Begrenzungselement in der Nut im ersten Befestigungsbereich und/oder in der Nut im zweiten Befestigungsbereich abschnittsweise quer zu der Teleskoprichtung geführt wird. Vorteilhaft kann dadurch bei einer Zugbelastung des Begrenzungselements in Teleskoprichtung die Kraft auf das Gehäuse übertragen werden.

Zudem wird vorgeschlagen, dass das Begrenzungselement in der Nut im ersten Befestigungsbereich und/oder in der Nut im zweiten Befestigungsbereich abschnittsweise U- oder S-förmig geführt wird. Vorteilhaft wird dadurch die Kraftübertragung auf das Gehäuse verbessert.

Des Weiteren wird vorgeschlagen, dass der erste Befestigungsbereich und/oder der zweite Befestigungsbereich zumindest ein Kraftschlusselement zur kraftschlüssigen Befestigung, insbesondere zur klemmenden Befestigung, des Begrenzungselements aufweisen. Durch diese Maßnahme kann vorteilhaft die Befestigung des Begrenzungselements weiter verbessert werden. Vorzugsweise ist das zumindest eine Kraftschlusselement in der Nut des ersten und/oder des zweiten Befestigungsbereichs angeordnet. Das Kraftschlusselement kann beispielhaft als eine lokale Verringerung des Querschnitts der Nut ausgebildet sein.

Weiterhin wird vorgeschlagen, dass das Begrenzungselement abschnittsweise verstärkt ist, insbesondere abschnittsweise zwischen dem ersten Befestigungsbereich und dem zweiten Befestigungsbereich verstärkt ist. Vorteilhaft wird dadurch die Lebensdauer des Begrenzungselements erhöht. Die Verstärkung erfolgt vorzugsweise in den Bereichen, die bei der Benutzung der Führungsvorrichtung stärker belastet werden, insbesondere die Bereiche der Begrenzungselements, die bei Zugbelastung reibschlüssig am Gehäuse des Bodenbearbeitungsgeräts oder am Fixiergehäuse anliegen und an denen sich das Begrenzungselement abstützt. Die Verstärkung erfolgt insbesondere durch eine zusätzliche Ummantelung des Begrenzungselements. Die Ummantelung ist vorteilhaft aus einem Kunststoff ausgebildet.

Zudem wird vorgeschlagen, dass das Begrenzungselement als ein Kabelelement zur Verbindung einer Elektronik des Bodenbearbeitungsgeräts mit der Schalteinheit des ersten Führungsglieds ausgebildet ist.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine perspektivische Ansicht eines Bodenbearbeitungsgeräts in einer ersten Ausführungsform;
- Fig. 1b: eine perspektivische Ansicht des Bodenbearbeitungsgeräts nach Fig. 1a im zusammengefalteten Zustand;
- Fig. 2a: eine perspektivische Teilansicht einer Fixiereinheit gemäß Fig. 1a;
- Fig. 2b: eine perspektivische Teilansicht der Fixiereinheit gemäß Fig. 1a im betätigten Zustand;
- Fig. 2c: eine perspektivische Ansicht eines Bedienelements der Fixiereinheit gemäße Fig. 2a;
- Fig. 3a: eine perspektivische Teilansicht der Fixiereinheit in einer zweiten Ausführungsform;
- Fig. 3b: eine perspektivische Teilansicht der Fixiereinheit gemäß Fig. 3a im betätigten Zustand;
- Fig. 4: eine perspektivische Teilansicht d Schwenkeinheit gemäß Fig. 1a;
- Fig. 5a: ein Querschnitt durch die Schwenkeinheit gemäß Fig. 4;
- Fig. 5b: eine perspektivische Ansicht der Schwenkeinheit gemäß Fig. 4 im betätigten Zustand;
- Fig. 5c: eine Querschnitt durch die Schwenkeinheit gemäß Fig. 4 im betätigten Zustand;
- Fig. 5d: eine Seitenansicht der Schwenkeinheit gemäß Fig. 4 im entriegelten Zustand;
- Fig. 6a: eine perspektivische Ansicht eines Begrenzungselements gemäß Fig. 4, angeordnet zwischen einem ersten Befestigungsbereich und einem zweiten Befestigungsbereich;
- Fig. 6b: eine perspektivische Ansicht des zweiten Befestigungsbereichs;
- Fig. 6c: eine perspektivische Ansicht des ersten Befestigungsbereichs.

### Beschreibung der Ausführungsbeispiele

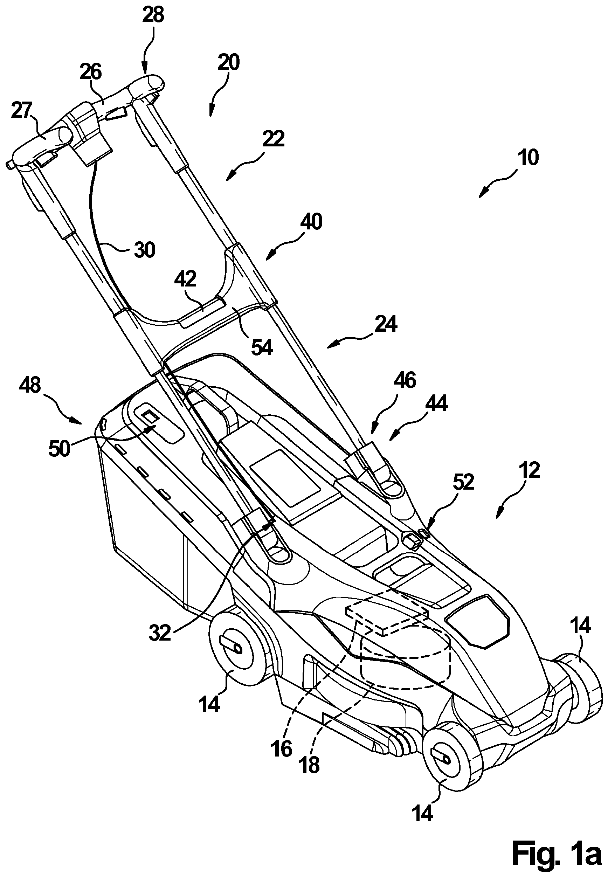

In Fig. 1a ist ein Bodenbearbeitungsgerät 10 in einer ersten Ausführungsform gezeigt. Das Bodenbearbeitungsgerät 10 ist als Rasenmäher ausgebildet und umfasst ein Gehäuse 12, in dem ein Fahrgestell (nicht dargestellt) und ein Mähwerk (nicht dargestellt) aufgenommen sind. Das Mähwerk umfasst Schneideelemente (nicht dargestellt), die beim Betrieb des Bodenbearbeitungsgeräts 10 zum Schneiden von Gras eingesetzt werden. Mit dem Fahrgestell sind vier Räder 14 verbunden. Das Bodenbearbeitungsgerät 10 ist als ein elektrisches Bodenbearbeitungsgerät 10 ausgebildet. Eine Energieversorgung des Bodenbearbeitungsgeräts 10 erfolgt dabei entweder über einen Netzanschluss oder einen Energiespeicher, wie beispielsweise einen wechselbaren Akkupack. Über die Energieversorgung wird zumindest eine Elektronik 16 und ein Elektromotor 18 mit Energie versorgt. Die Elektronik 16 ist zur Steuerung des Bodenbearbeitungsgeräts 10, insbesondere zur Steuerung des Elektromotors 18 des Bodenbearbeitungsgeräts 10, ausgebildet. Über den Elektromotor 18 wird das Mähwerk, insbesondere die Schneideelemente des Mähwerks, angetrieben.

Das Gehäuse 12 ist mit einer Führungsvorrichtung 20 verbunden, über die das Bodenbearbeitungsgerät 10 per Hand führbar ist. Die Führungsvorrichtung 20 weist zwei Führungsglieder 22, 24 auf, die teleskopartig ineinander geführt sind. Das erste Führungsglied 22 umfasst einen Handgriff 26 mit einem Griffbereich 27. Der Handgriff 26 umfasst eine Schalteinheit 28, die elektrisch mit der Elektronik 16 des Bodenbearbeitungsgeräts 10 verbunden ist. Die Verbindung erfolgt beispielhaft über eine Kabelverbindung, es ist allerdings auch denkbar, dass die Verbindung zwischen der Schalteinheit 28 und der Elektronik 16 drahtlos erfolgt. Die elektrische Verbindung erfolgt beispielhaft über ein Kabelelement 30, das im Gehäuse 12 befestigt ist und über einen Spalt 32 im Gehäuse 12 nach außen geführt wird. An einem Ende des Kabelelements 30 ist das Kabelelement 30 elektrisch und mechanisch am Handgriff 26 befestigt. Im verbundenen Zustand kann durch eine Betätigung der Schalteinheit 28 der Elektromotor 18 gesteuert, insbesondere ein- und ausgeschaltet, werden.

Das erste Führungsglied 22 und das zweite Führungsglied 24 sind lösbar miteinander verbunden. Das erste Führungsglied 22 weist eine Fixiereinheit 40 zur lösbaren Fixierung des ersten Führungsglieds 22 am zweiten Führungsglied 24 auf. Die Fixiereinheit 40 weist ein Bedienelement 42 auf, wobei über eine Betätigung des Bedienelements 42 die Fixierung des ersten Führungsglieds 22 am zweiten Führungsglied 24 lösbar ist. Das zweite Führungsglied 24 umfasst eine Schwenkeinheit 44, über die die Führungsvorrichtung 20 schwenkbar mit dem Gehäuse 12 des Bodenbearbeitungsgeräts 10 verbunden ist. Die Schwenkeinheit 44 weist des Weiteren eine betätigbare Sicherungsvorrichtung 46 auf, die in einem unbetätigten Zustand ein Schwenken der Führungsvorrichtung 20 gegenüber dem Gehäuse 12 verhindert.

Am Gehäuse 12 des Bodenbearbeitungsgeräts 10 ist ein Auffangbehälter 48 lösbar verbunden. Der Auffangbehälter 48 ist insbesondere als ein Grasauffangbehälter ausgebildet, der ein Volumen von über 301 einschließt. Der Auffangbehälter 48 ist insbesondere faltbar ausgebildet, sodass er geleert und im gefalteten Zustand platzsparend gelagert werden kann. Des Weiteren weist der Auffangbehälter 48 eine Anzeigevorrichtung 50 auf, über die ein Füllstand des Auffangbehälters 48 anzeigbar ist. Weiterhin umfasst das Bodenbearbeitungsgerät 10 eine Stellvorrichtung 52 zur Einstellung einer Schnitthöhe des Bodenbearbeitungsgeräts. Vorteilhaft kann über die Stellvorrichtung 52 der Abstand zwischen den Rädern 14 und dem Mähwerk eingestellt werden.

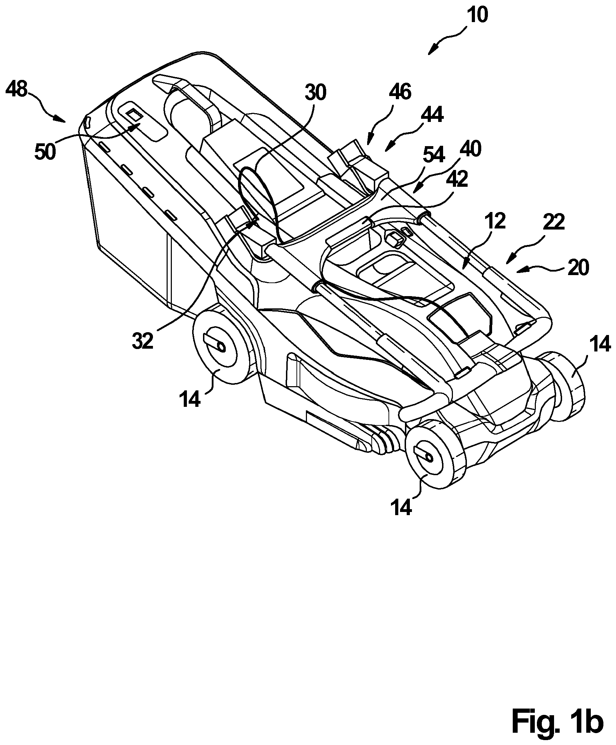

In Fig. 1b ist das Bodenbearbeitungsgerät 10 im zusammengefalteten Zustand gezeigt. Die Führungsvorrichtung 20 ist durch eine Bewegung des ersten Führungsglieds 22 in Richtung des zweiten Führungsglieds 24 zusammengeschoben und über die Schwenkeinheit 44 geschwenkt dargestellt.

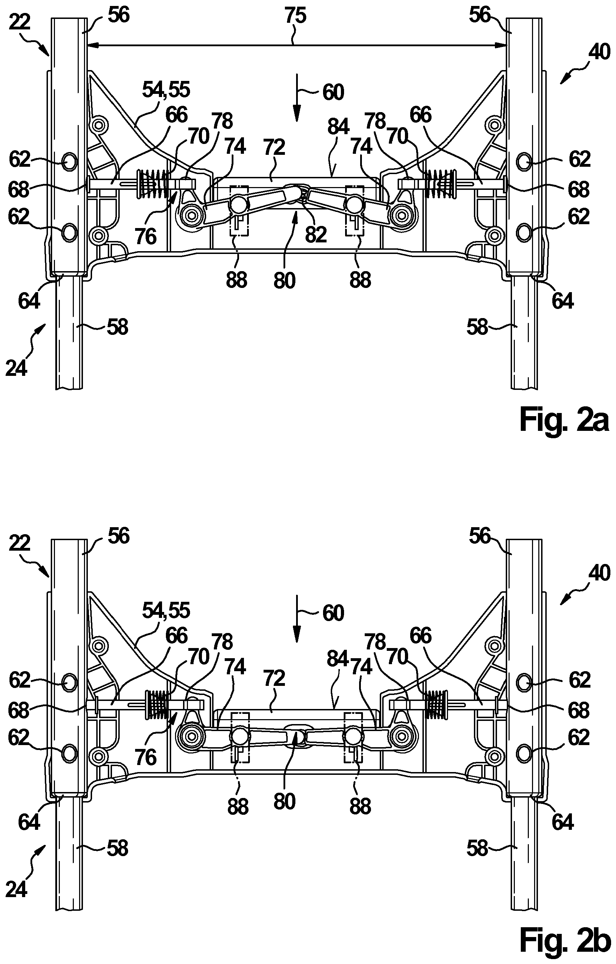

In Fig. 2a und 2b ist in einer perspektivischen Teilansicht die Fixiereinheit 40 gezeigt. In Fig. 2a ist die Fixiereinheit 40 im unbetätigten Zustand gezeigt, in Fig. 2b ist die Fixiereinheit im betätigten Zustand gezeigt. Die Fixiereinheit 40 umfasst ein Fixiergehäuse 54, in welchem das erste Führungsglied 22 gelagert ist. Das Fixiergehäuse 54 besteht aus zwei Gehäusehalbschalen 55, die über Schraubverbindungen miteinander verbunden sind. In Fig. 2a ist zur verbesserten Darstellung nur eine Gehäusehalbschale 55 gezeigt. Das erste und das zweite Führungsglied 22, 24 umfassen jeweils zwei zueinander parallel verlaufende Rohrelemente 56, 58. Die Rohrelemente 56 des ersten Führungsglieds 22 weisen einen größeren Rohrdurchmesser auf, als die Rohrelemente 58 des zweiten Führungsglieds 24. Durch die unterschiedlichen Rohrdurchmesser kann das zweite Führungsglied 24 in dem ersten Führungsglied 22 teleskopartig entlang einer Teleskoprichtung 60 verschoben werden. Das Fixiergehäuse 54 ist formschlüssig zumindest in und entgegen der Teleskoprichtung 60 mit den Rohrelementen 56 des ersten Führungsglieds 22 verbunden. Hierzu weisen die Rohrelemente 56 des ersten Führungsglieds 22 jeweils zwei Querbohrungen 62 auf, die zu nicht dargestellten kreisförmigen Anschlägen im Fixiergehäuse 54 korrespondieren. Um einen Verschleiß der ineinander und beweglich zueinander geführten Rohrelemente 56, 58 zu verringern, ist zwischen den metallischen Rohrelementen 56, 58 ein rohrförmiges Gleitlager 64 aus Kunststoff angeordnet. Über das Gleitlager 64 wird das Rohrelement 58 des zweiten Führungsglieds 24 im ersten Rohrelement 56 des ersten Führungsglieds 22 derart geführt, dass im Wesentlichen kein direkter Kontakt zwischen den beiden Rohrelementen 56, 58 entsteht.

Das zweite Führungsglied 24, ist entlang der Teleskoprichtung 60 relativ zum ersten Führungsglied 22 beziehungsweise relativ zu der Fixiereinheit 40 beweglich im ersten Führungsglied 22 gelagert. Die Fixiereinheit 40 weist zwei Fixierelemente 66 auf, die zur bewegungsfesten Fixierung des ersten Führungsglieds 22 mit dem zweiten Führungsglied 24 ausgebildet sind. Die Fixierelemente 66 sind linear beweglich im Fixiergehäuse 54 gelagert. Die Rohrelemente 56 des ersten Führungsglieds 22 weisen jeweils eine Fixieröffnung 68 auf, die auf Höhe der Fixierelemente 66 angeordnet ist. Das zweite Führungsglied 24 weist vorteilhaft eine Mehrzahl an Fixieröffnungen (nicht dargestellt) auf, wodurch es möglich ist, das erste Führungsglied 22 mit dem zweiten Führungsglied 24 in unterschiedliche Positionen zu fixieren. Im fixierten Zustand, wie in Fig. 2a gezeigt, ragen die Fixierelemente 66 durch jeweils eine Fixieröffnung 68 des ersten Führungsglieds 22 und durch jeweils eine Fixieröffnung des zweiten Führungsglieds 24. Damit sich die Fixierung nicht löst, werden die Fixierelemente 66 von jeweils einem Rückstellelement 70 mit einer Kraft beaufschlagt. Das Rückstellelement 70 ist beispielhaft als eine Schraubenfeder ausgebildet. Das Rückstellelement 70 umschließt das Fixierelement 66 teilweise. Das Rückstellelement 70 ist axial derart zwischen dem Fixiergehäuse 54 und dem Fixierelement 66 gelagert, dass die ausgehend von dem Rückstellelement 70 wirkende Kraft in Richtung einer Fixierposition auf das Fixierelement 66 wirkt.

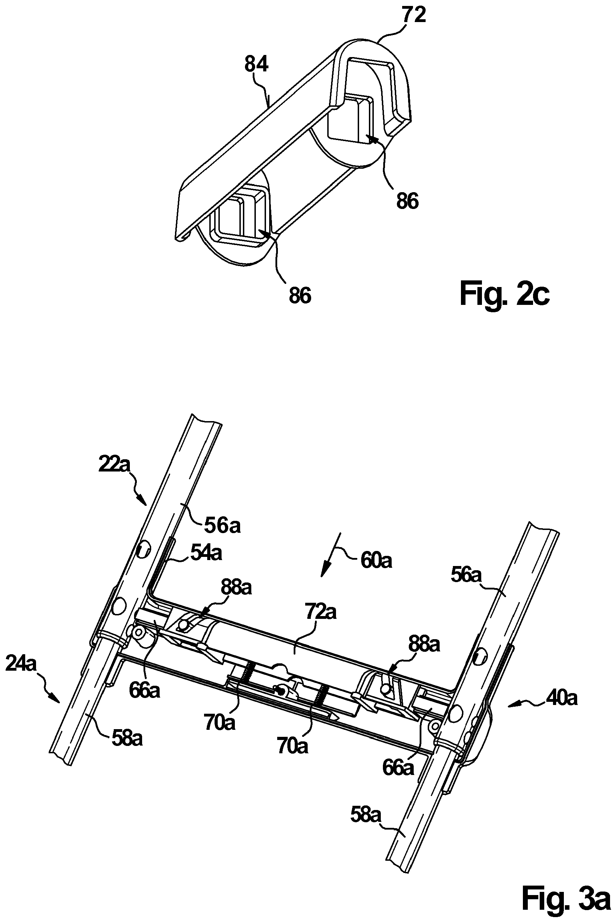

Zum Lösen der Fixierung weist die Fixiereinheit 40 ein Bedienelement 72 auf (siehe Fig. 2c). Das Bedienelement 72 ist mittig zwischen den beiden Rohrelementen 56 des ersten Führungsglieds 22 angeordnet. Das Bedienelement 72 ist beweglich relativ zum Fixiergehäuse 54 und insbesondere beweglich entlang der Teleskoprichtung 60 gelagert. Über eine Betätigung des Bedienelements 72 werden die Fixierelemente 66 entgegen der auf sie wirkenden Kraft aus den Fixieröffnungen 68 des ersten und des zweiten Führungsglieds 22, 24 bewegt. Die Übertragung der durch die Betätigung des Bedienelements 72 wirkenden Kraft auf die Fixierelemente 66 erfolgt in dieser Ausführungsform nicht direkt sondern über zwei Übertragungselemente 74. Die Übertragungselemente 74 sind schwenkbar im Fixiergehäuse 54 gelagert. Die Übertragungselemente 74 sind im Wesentlichen L-förmig ausgebildet. An einem ersten Ende 76 greifen die Übertragungselemente 74 in jeweils einer Öffnung 78 der Fixierelemente 66 ein, wodurch die Bewegung der Fixierelemente 66 mit der Bewegung der Übertragungselemente 74 gekoppelt wird. Die beiden Übertragungselemente 74 sind direkt miteinander gekoppelt, wodurch vorteilhaft auch die beiden Fixierelemente 66 mechanisch miteinander gekoppelt sind. Die beiden Übertragungselemente 74 sind insbesondere derart direkt miteinander gekoppelt, dass die beiden Übertragungselemente 74 stets im Wesentlichen um denselben Winkelbereich gedreht werden. Die beiden Übertragungselemente 74 sind an einem zweiten Ende 80 formschlüssig miteinander verbunden und ineinander geführt. Die formschlüssige Verbindung erfolgt über eine Längsnut 82 mit einem korrespondierenden zumindest teilweise runden Formschlusselement (nicht dargestellt). Der Außenumfang der Formschlusselemente entspricht im Wesentlichen der Breite der Längsnut 82 um eine möglichst spielfreie Führung zu realisieren.

Das Bedienelement 72 der Fixiereinheit 40 erstreckt sich über eine Länge von ca. 38 % des Abstands 75 der Rohrelemente 56 voneinander. Insbesondere erstreckt sich ein Bedienbereich 84, der sich auf der Außenseite des Bedienelements 72 befindet, über eine Länge von ca. 38 % des Abstands 75 der Rohrelemente 56 voneinander. Das Bedienelement 72 weist an seiner Innenseite zwei angeformte Aufnahmen 86 auf, die zu einer formschlüssigen Verbindung des Bedienelements 72 mit den Übertragungselementen 74 ausgebildet sind. Die Aufnahmen 86 weisen einen rechteckigen Querschnitt auf und sind parallel zueinander auf der gleichen Höhe angeordnet. Bei einer Betätigung des Bedienelements 72 werden in einem Kraftübertragungsbereich 88, der im Wesentlichen durch die Kontaktfläche der Aufnahmen 86 mit den Übertragungselementen 74 aufgespannt wird, die Kraft in Teleskoprichtung 60 in eine Drehbewegung der Übertragungselemente 74 übertragen. Die Drehbewegung der Übertragungselemente 74 bewirkt durch die Kopplung mit dem Fixierelement 66 eine Bewegung der Fixierelemente 66 in Freigabeposition. Der Abstand der Kraftübertragungsbereiche 88 beträgt ca. 25 % des Abstands 75 der Rohrelemente 56 voneinander.

In Fig. 3a ist die Fixiereinheit 40a in einer zweiten Ausführungsform gezeigt. Bauteile mit im Wesentlichen derselben Funktion wie im vorigen Ausführungsbeispiel werden mit derselben Bezugszahl und mit einem zusätzlichen Buchstaben bezeichnet. Im Unterschied zu dem Ausführungsbeispiel nach Fig. 2a und Fig. 2b werden die Rohrelemente 56a des ersten Führungselements 22a und die Rohrelemente 58a des zweiten Führungselements 24a im Fixiergehäuse 54a gelagert. Das Bedienelement 72a ist in dieser Ausführungsform direkt mit den Fixierelementen 66a gekoppelt. Die Fixierelemente 66a werden in jeweils einer Führungskulisse 89a geführt, die sich schräg zur Teleskoprichtung 60a erstreckt, beispielsweise um 45°. Im unbetätigten Zustand der Fixiereinheit 40a wird das Bedienelement 72a entgegen der Teleskoprichtung 60a mittels zweier als Schraubenfedern ausgebildeter Rückstellelemente 70a derart mit einer Kraft beaufschlagt, dass die Fixierelemente 66 in der Fixierposition gehalten werden.

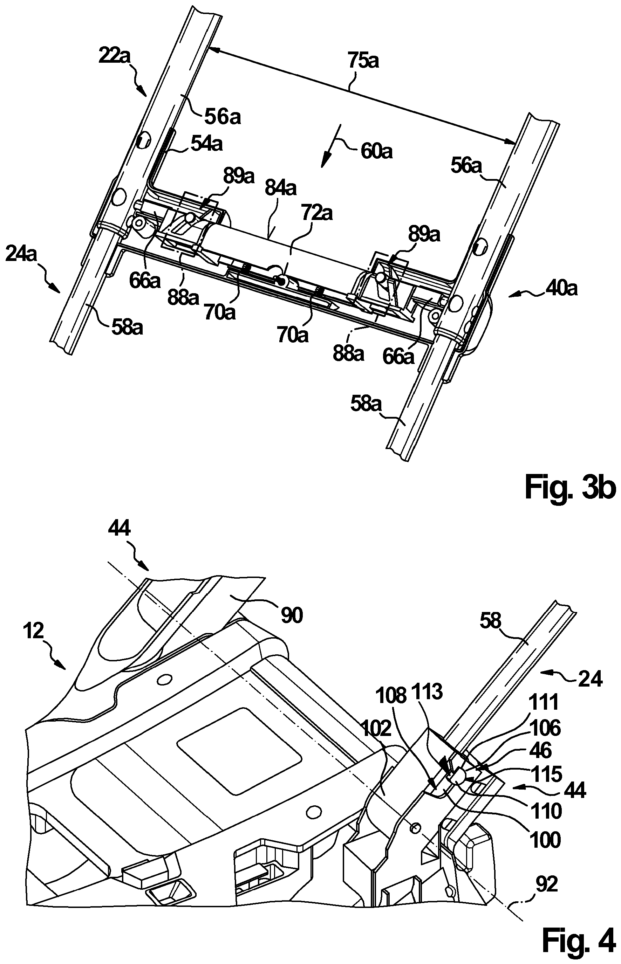

In Fig. 3b ist die Fixiereinheit 40a im betätigten Zustand gezeigt. Über eine Betätigungskraft auf das Bedienelement 72a in Teleskoprichtung 60a werden die Fixierelemente 66a derart durch die Führungskulisse 89a senkrecht zu der Teleskoprichtung 60a bewegt, dass sich die Fixierelemente 66a in Richtung einer Freigabeposition bewegen. Der Bedienbereich 84a des Bedienelements 72a, der sich auf der Außenseite des Bedienelements 72a befindet, erstreckt sich über eine Länge von ca. 50 % des Abstands 75a der Rohrelemente 56a voneinander. Der Abstand der Kraftübertragungsbereiche 88a beträgt ca. 70 % des Abstands 75 der Rohrelemente 56a voneinander. Somit ist in dieser Ausführungsform der Abstand der Kraftübertragungsbereiche 88a länger als der Bedienbereich 84a.

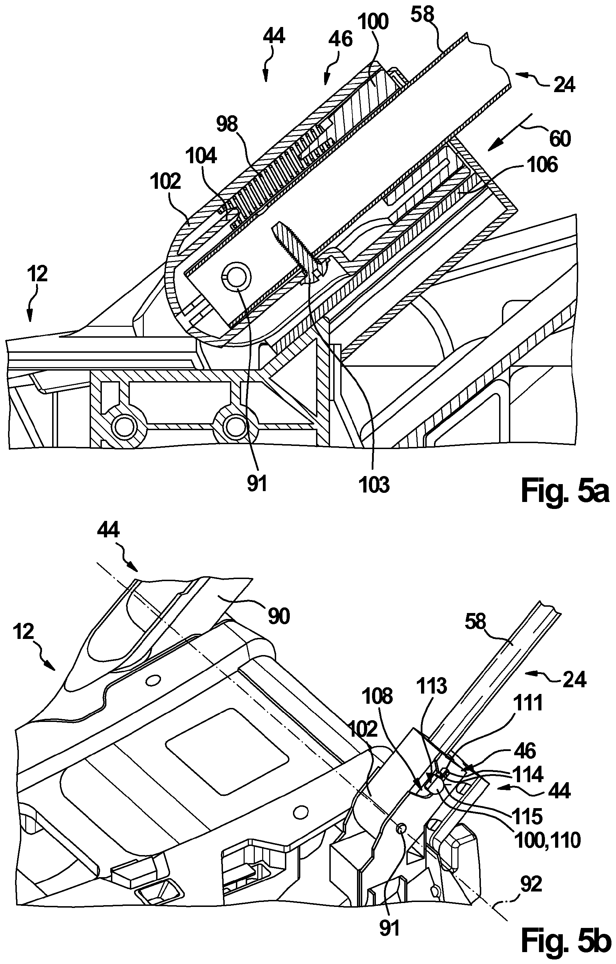

In Fig. 4 ist die Schwenkeinheit 44 in einer perspektivischen Ansicht gezeigt. Im montierten Zustand des Bodenbearbeitungsgeräts 10 ist die Schwenkeinheit 44 seitlich von einem Gehäuseelement 90 abgedeckt, um ein Eindringen von Gras oder anderen Verunreinigungen, die zu einer Beeinträchtigung der Funktion der Schwenkeinheit 44 führen könnten, zu verhindern. Die parallel zueinander verlaufenden Rohrelemente 58 des zweiten Führungsglieds 24 sind jeweils mit einer Schwenkeinheit 44 schwenkbar mit dem Gehäuse 12 des Bodenbearbeitungsgeräts 10 verbunden. Zur vereinfachten Darstellung ist in Fig. 4 ein Gehäuseelement 90 ausgeblendet. Zur schwenkbaren Lagerung des zweiten Führungsglieds 24 am Gehäuse 12 weisen die Rohrelemente 58 des zweiten Führungsglieds 24 jeweils eine Querbohrung (nicht dargestellt auf) auf. Über einen Bolzen 91 (siehe Fig. 5a) ist das Rohrelement 58 schwenkbar um eine Schwenkachse 92 mit dem Gehäuse 12 verbunden. Des Weiteren umfasst die Schwenkeinheit 44 eine betätigbare Sicherungsvorrichtung 46, die in einem unbetätigten Zustand ein Schwenken der Führungsvorrichtung 20 gegenüber dem Gehäuse 12 verhindert. Die Sicherungsvorrichtung 46 umfasst ein über ein Federelement 98 (siehe Fig. 5a) mit Kraft beaufschlagtes Sicherungselement 100, das axial beweglich, insbesondere entlang der Teleskoprichtung 60, in einem Aufnahmeelement 102 gelagert ist. Das Sicherungselement 100 ist an der Außenfläche des zweiten Führungsglieds 24, insbesondere an der Außenfläche des Rohrelements 58 des zweiten Führungsglieds 24, angeordnet und umschließt dieses entlang der Umfangsrichtung zumindest teilweise. Das Sicherungselement 100 wiederum wird von dem Aufnahmeelement 102 umschlossen. Somit sind das Aufnahmeelement 102 und das Rohrelement 58 des zweiten Führungsglieds 24 zur gleitenden Lagerung des Sicherungselements 100 ausgebildet.

In Fig. 5a ist die Schwenkeinheit 44 mit der Sicherungsvorrichtung 46 in einem Querschnitt gezeigt. Das Aufnahmeelement 102 ist über Bohrungen (nicht dargestellt), die konzentrisch zu den Querbohrungen der Rohrelemente 58 des zweiten Führungsglieds 24 angeordnet sind, schwenkbar mit dem Gehäuse 12 verbunden. Zudem ist das Aufnahmeelement 102 über eine Schraubverbindung 103 (siehe Fig. 5a) drehfest am ersten Führungsglied 24, insbesondere dem Rohrelement 58 des zweiten Führungsglieds 24, befestigt. Das als Schraubenfeder ausgebildete Federelement 98 umschließt einen einstückig im Aufnahmeelement 102 angeformten Zapfen 104 und beaufschlagt das Sicherungselement 100 entlang der Teleskoprichtung 60 in Richtung einer Fixierposition mit einer Kraft. Die axiale Bewegung des Sicherungselements 100 wird auf der einen Seite, insbesondere in Richtung der Freigabeposition, durch den Zapfen 104 begrenzt und auf der anderen Seite, insbesondere in Richtung der Fixierposition, durch das Gehäuse 12 des Bodenbearbeitungsgeräts 10 begrenzt. Insbesondere wird das Sicherungselement 100 im unbetätigten Zustand durch ein Gehäuselagerelement 106 gehalten, dass hakenförmig ausgebildet ist. Das Gehäuselagerelement 106 ist radial außerhalb des Aufnahmeelements 102 der Sicherungsvorrichtung 46 angeordnet. Im Aufnahmeelement 102 sind seitlich zwei längliche Ausnehmungen 108 angeordnet, über die zwei gegenüberliegende Vorsprünge 110 des Sicherungselements 100 sich radial nach außen erstrecken und einen axialen Anschlag 111 des Gehäuselagerelements 106 beaufschlagen. Der axiale Anschlag 111 ist insbesondere im hakenförmigen Bereich des Gehäuselagerelements 106 angeordnet. Des Weiteren weist jeweils einer der Vorsprünge 110 des Sicherungselements 100 einen Hinterschnittbereich 113 und einen Gleitbereich 115 auf, die gegenüber einander angeordnet sind (siehe Fig. 5b). Der Hinterschnittbereich 113 ist eben beziehungsweise geradlinig ausgebildet, der Gleitbereich 115 ist abgerundet ausgebildet. Im unbetätigten Zustand der Schwenkeinheit 44 ist der Vorsprung 110 in Schwenkrichtung über zwei radiale Anschläge 114 (siehe Fig. 5b) im Gehäuselagerelement 106 gehalten. Vorteilhaft werden durch den hakenförmigen Bereich des Gehäuselagerelements 106 sowohl der axiale Anschlag 111 als auch die radialen Anschläge 114 gebildet.

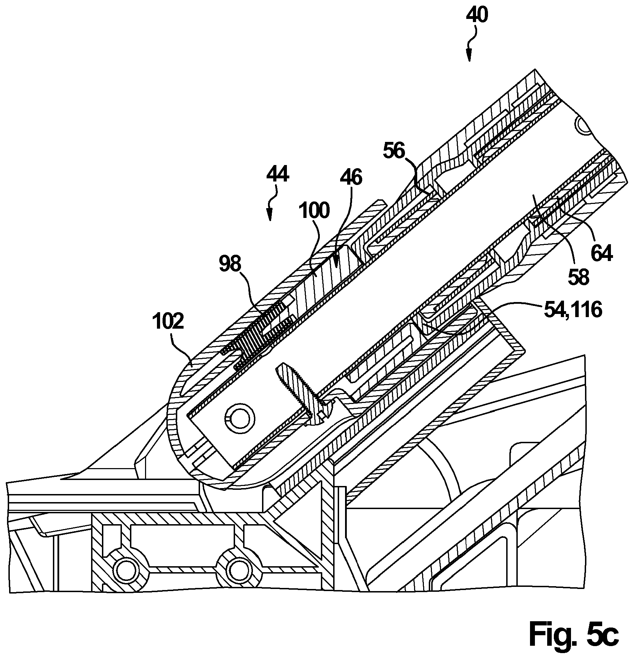

In Fig. 5b und Fig. 5c ist die Schwenkeinheit 44 in einem betätigten Zustand gezeigt. Die Betätigung der Sicherungsvorrichtung 46 erfolgt über eine axiale Verschiebung des Sicherungselements 100, die durch eine Beaufschlagung des Sicherungselements 100 mit einer Kraft durch ein Entriegelungselement 116 erfolgt. Das Entriegelungselement 116 wird beispielhaft durch die Fixiereinheit 40, insbesondere durch das Fixiergehäuse 54 der Fixiereinheit 40, gebildet. Das Fixiergehäuse 54 der betätigten Fixiereinheit 40 ist entlang der Teleskoprichtung 60 relativ zu der Schwenkeinheit 44 derart bewegbar, dass das Sicherungselement 100 der Sicherungsvorrichtung 46 über das Fixiergehäuse 54 mit einer Kraft beaufschlagt und damit betätigt wird. Im betätigten Zustand der Schwenkeinheit 44 ist sowohl das Sicherungselement 100 als auch das Entriegelungselement 116 vom Aufnahmeelement 102 zumindest teilweise umschlossen. Wie in Fig. 5b zu sehen ist, wird durch die Betätigung der Schwenkeinheit 44 das Sicherungselement 100, insbesondere der Vorsprung 110 des Sicherungselements 100, axial von dem axialen Anschlag 111 gelöst. Der Vorsprung 110 wird zwischen den beiden radialen Anschlägen 114 und in der Ausnehmung 108 des Aufnahmeelements 102 solange axial geführt, bis der Hinterschnitt zwischen einem der radialen Anschläge 114 und dem Sicherungselement 100 gelöst wird und somit ein rotatorischer Freiheitsgrad der Führungsvorrichtung 20 freigegeben wird. Die Führungsvorrichtung 20 kann somit im betätigten Zustand der Schwenkeinheit 44 um die Schwenkachse 92 gedreht werden, bis die Führungsvorrichtung 20 auf dem Gehäuse 12 des Bodenbearbeitungsgeräts 10 anliegt.

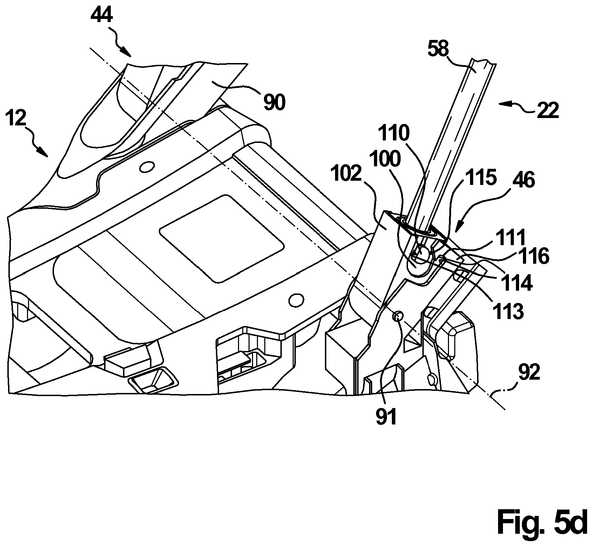

Während zur Entriegelung der Schwenkeinheit 44 eine axiale Verlagerung des Sicherungselements 100 durch eine lineare Bewegung in Teleskoprichtung 60 des erste Führungsglieds 22 relativ zum zweiten Führungsglied 24 benötigt wird, erfolgt die Verriegelung mittels einer Schwenkbewegung automatisch, wie in Fig. 5d gezeigt. In Fig. 5d wird die Führungsvorrichtung 20 entlang der Schwenkrichtung um die Schwenkachse 92 in Richtung der Verriegelungsposition bewegt. Das Gehäuselagerelement 106 wird durch die Sicherungsvorrichtung 46 mit einer Kraft beaufschlagt. Insbesondere liegt der Vorsprung 110 des Sicherungselements 100 an einem dem radialen Anschlag 114 des Gehäuselagerelements 106 gegenüberliegenden Gleitanschlag 117 an. Vorteilhaft ist der Gleitbereich 115 des Vorsprungs 110 des Sicherungselements 100 derart korrespondierend zu dem Gleitanschlag 117 des Gehäuselagerelements 106 ausgebildet, dass eine Schwenkbewegung der Führungsvorrichtung 20 in eine axiale beziehungsweise lineare Bewegung des Sicherungselements 100 übertragen wird. Beispielhaft ist der Gleitbereich 115 des Vorsprungs 110 derart abgerundet ausgebildet, dass der Vorsprung 110 an dem Gleitanschlag 117, der schräg bezüglich der Teleskoprichtung 60 ausgebildet ist, entlang gleitet. Nachdem der Vorsprung 110 des Sicherungselements 100 an dem Gleitanschlag 117 vorbeigeführt wurde, rastet das Sicherungselement 100 durch die Federkraft des Federelements 98 formschlüssig in den hakenförmigen Bereich des Gehäuselagerelements 106 ein.

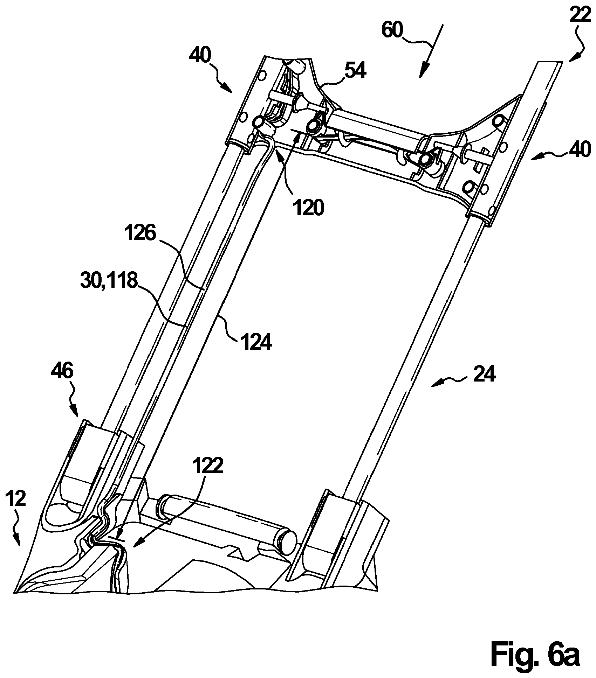

Wie in Fig. 6a gezeigt, ist die Bewegung des ersten Führungsglieds 22 entgegen der Teleskoprichtung 60 über ein Begrenzungselement 118 begrenzt. Das Begrenzungselement 118 ist erfindungsgemäß als das Kabelelement 30 des Bodenbearbeitungsgeräts 10 ausgebildet. Das Kabelelement 30 ist außerhalb der Rohrelemente 56, 58 geführt, alternativ ist aber auch denkbar, dass das Kabelelement 30 innerhalb zumindest eines der Rohrelemente 56, 58 geführt ist. Das Begrenzungselement 118 ist über einen ersten Befestigungsbereich 120 am ersten Führungsglied 22 befestigt und über einen zweiten Befestigungsbereich 122 an dem Gehäuse 12 befestigt, wie in Fig. 6a gezeigt ist. Die Befestigung des Begrenzungselements 118 in den Befestigungsbereichen 120, 122 ist insbesondere nicht werkzeuglos, beziehungsweise ohne zumindest einer teilweisen Demontage des Bodenbearbeitungsgeräts 10, lösbar. Entlang der Teleskoprichtung 60 kann der Abstand zwischen dem ersten Befestigungsbereich 120 und dem zweiten Befestigungsbereich 122 im betätigten Zustand der Fixiereinheit 40 verändert werden. Die Länge des Bereichs, in welchem sich das erste Führungsglied 22 relativ zu dem zweiten Führungsglied bewegen kann, wird dabei in Teleskoprichtung 60 durch ein Beaufschlagen der Sicherungsvorrichtung 46 durch das Fixiergehäuse 54 und entgegen der Teleskoprichtung 60 durch das Begrenzungselement 118 begrenzt. Das Begrenzungselement 118 ist derart unbeweglich im ersten und im zweiten Befestigungsbereich 120, 122 befestigt, dass das erste Führungsglied 22 nicht über das Ende des zweiten Führungsglieds 24 hinaus gezogen werden kann. Das Begrenzungselement 118 ist derart flexibel ausgebildet, dass es sich zumindest innerhalb eines Befestigungsabschnitts 124, der sich zwischen dem ersten Befestigungsbereich 120 und dem zweiten Befestigungsbereich 122 erstreckt, verbiegen kann. Innerhalb des Befestigungsabschnitts 124 wird das Begrenzungselement 118 bei jeder Relativbewegung des ersten Führungsglieds 22 zum zweiten Führungsglied 24 verbogen. Zudem wird das Begrenzungselement 118, bei Erreichen einer Endposition des ersten Führungsglieds 22 entgegen der Teleskoprichtung 60, sowohl im ersten Befestigungsbereich als auch im zweiten Befestigungsbereich 120, 122 stark auf Zug belastet. Um die Haltbarkeit des Begrenzungselements 118 zu erhöhen, ist das Begrenzungselement 118 in diesem Bereich verstärkt. Das Begrenzungselement 118 ist in diesem Bereich durch eine zusätzliche Schutzschicht 126, die beispielhaft aus einer umschließenden Gummiisolierung ausgebildet ist, verstärkt.

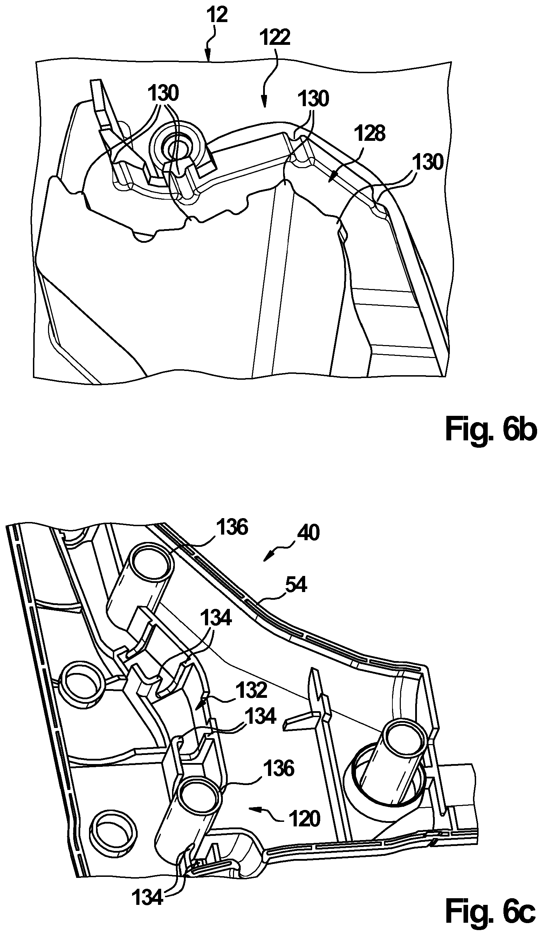

In Fig. 6b ist in einem perspektivischen Teilschnitt der zweite Befestigungsbereich 122 im Gehäuse 12 des Bodenbearbeitungsgeräts 10 gezeigt. Das Begrenzungselement 118 wird in einer Nut 128 geführt. Zur Fixierung des Begrenzungselements 118 weist die Nut 128 Kraftschlusselemente 130 auf, die den Querschnitt der Nut 128 bereichsweise verkleinern und das Begrenzungselements 118 im eingelegten Zustand klemmend fixieren. Zusätzlich ist die Nut 128 S-förmig ausgebildet, wobei sich der S-förmige Bereich im Wesentlichen quer zum Ausgang der Nut 128 in Richtung des ersten Befestigungsbereichs 120 erstreckt. Durch die S-förmige Führung des Begrenzungselements 118 im zweiten Befestigungsbereich 122 verspannt sich das Begrenzungselement 118 bei einer Belastung auf Zug im zweiten Befestigungsbereich 122 und wird dadurch auf seiner Position gehalten.

In Fig. 6c ist in einem perspektivischen Teilschnitt der erste Befestigungsbereich 120 im Fixiergehäuse 54 gezeigt. Analog zum zweiten Befestigungsbereich 122 wird das Begrenzungselement 118 auch im ersten Befestigungsbereich 120 in einer Nut 132 geführt. Die Nut 132 im ersten Befestigungsbereich 120 verläuft im Wesentlichen parallel zur den Rohrelementen 56, 58 der Führungsvorrichtung 20. Die Nut 132 des ersten Befestigungsbereichs 120 weist ebenfalls Kraftschlusselemente 134 auf, die das Begrenzungselement 118 klemmend fixieren. Das Begrenzungselement 118 wird innerhalb der Nut 132 unmittelbar im Bereich des Eingangs U-förmig geführt, um wie bereits durch den S-förmigen Bereich im zweiten Befestigungsbereich 122 eine Kraft, die durch Zugbelastung auf das Begrenzungselement 118 wirkt, auf das Fixiergehäuse 54 zu übertragen. Die Nut 132 wird abschnittsweise durch Schraubdome 136 im Fixiergehäuse 54 gebildet. Insbesondere wird der U-förmige Bereich der Nut 132 durch einen der Schraubdome 136 gebildet.

## Patentansprüche

1. Handgeführtes Bodenbearbeitungsgerät, insbesondere Rasenmäher, mit einem Gehäuse (12) und mit einer Führungsvorrichtung (20), wobei die Führungsvorrichtung (20) zwei teleskopartig ineinander geführte Führungsglieder (22, 24) aufweist, wobei das erste Führungsglied (22) einen eine Schalteinheit (28) umfassenden Handgriff (26) aufweist und das zweite Führungsglied (24) mit dem Gehäuse (12) verbunden ist, wobei eine Bewegung des ersten Führungsglieds (22) entgegen einer Teleskoprichtung (60) über ein Begrenzungselement (118) begrenzt wird und wobei über das Begrenzungselement (118) eine maximale Höhe der Führungsvorrichtung (20) einstellbar ist,
**dadurch gekennzeichnet, dass**
das Begrenzungselement (118) über zumindest einen ersten Befestigungsbereich (120) an dem ersten Führungsglied (22) und über zumindest einen zweiten Befestigungsbereich (124) an dem zweiten Führungsglied (24) und/oder an dem Gehäuse (12) befestigt ist, wobei das Begrenzungselement (118) als ein flexibles Kabelelement (30) ausgebildet ist.

2. Handgeführtes Bodenbearbeitungsgerät nach Anspruch 1, **dadurch gekennzeichnet, dass** das Führungsglied (20) eine Fixiereinheit (40) zur lösbaren Fixierung der Führungsglieder (22, 24) miteinander aufweist, wobei die Fixiereinheit (40) ein Fixiergehäuse (54) umfasst, in welchem der erste oder der zweite Befestigungsbereich (120, 122) des Begrenzungselements (118) angeordnet ist.

3. Handgeführtes Bodenbearbeitungsgerät nach Anspruch 2, **dadurch gekennzeichnet, dass** der erste Befestigungsbereich (120) im Fixiergehäuse (54) der Fixiereinheit (40) und der zweite Befestigungsbereich (122) im Gehäuse (12) des Bodenbearbeitungsgeräts (10) angeordnet sind.

4. Handgeführtes Bodenbearbeitungsgerät nach einem der vorhergehenden Ansprüche, **dadurch gekennzeichnet, dass** das Begrenzungselement (118) zumindest teilweise in einer Nut (132) im ersten Befestigungsbereich (120) und/oder einer Nut (128) im
zweiten Befestigungsbereich (122) geführt wird.

5. Handgeführtes Bodenbearbeitungsgerät nach Anspruch 4, **dadurch gekennzeichnet, dass** das Begrenzungselement (118) in der Nut (132) im ersten Befestigungsbereich (120) und/oder in der Nut (128) im zweiten Befestigungsbereich (132) abschnittsweise senkrecht zu der Teleskoprichtung (60) geführt wird.

6. Handgeführtes Bodenbearbeitungsgerät nach einem der Ansprüche 4 bis 5, **dadurch gekennzeichnet, dass** das Begrenzungselement (118) in der Nut (132) im ersten Befestigungsbereich (120) und/oder in der Nut (128) im zweiten Befestigungsbereich (122) abschnittsweise U- oder S-förmig geführt wird.

7. Handgeführtes Bodenbearbeitungsgerät nach einem der vorhergehenden Ansprüche, **dadurch gekennzeichnet, dass** der erste Befestigungsbereich (120) und/oder der zweite Befestigungsbereich (122) zumindest ein Kraftschlusselement (130, 134) zur kraftschlüssigen Befestigung, insbesondere zur klemmenden Befestigung, des Begrenzungselements (118) aufweist.

8. Handgeführtes Bodenbearbeitungsgerät nach einem der vorhergehenden Ansprüche, **dadurch gekennzeichnet, dass** das Begrenzungselement (118) abschnittsweise verstärkt ist, insbesondere abschnittsweise zwischen dem ersten Befestigungsbereich (120) und dem zweiten Befestigungsbereich (122) verstärkt ist.

9. Handgeführtes Bodenbearbeitungsgerät nach einem der vorhergehenden Ansprüche, **dadurch gekennzeichnet, dass** das Begrenzungselement (118) als ein Kabelelement (30) zur Verbindung einer Elektronik (16) des Bodenbearbeitungsgeräts (10) mit der Schalteinheit (28) des ersten Führungsglieds (22) ausgebildet ist.

## Claims

1. Manually guided ground-working appliance, in particular a lawn mower, with a housing (12) and with a guide device (20), wherein the guide device (20) has two guide members (22, 24) guided telescopically one inside the other, wherein the first guide member (22) has a handle (26) comprising a switching unit (28), and the second guide member (24) is connected to the housing (12), wherein a movement of the first guide member (22) counter to a telescopic direction (60) is limited via a limiting element (118), and wherein a maximum height of the guide device (20) is adjustable via the limiting element (118),
**characterized in that**
the limiting element (118) is fastened to the first guide member (22) via at least one first fastening region (120) and to the second guide member (24) and/or to the housing (12) via at least one second fastening region (124), wherein the limiting element (118) is designed as a flexible cable element (30).

2. Manually guided ground-working appliance according to Claim 1, **characterized in that** the guide member (20) has a fixing unit (40) for releasably fixing the guide members (22, 24) to each other, wherein the fixing unit (40) comprises a fixing housing (54) in which the first or the second fastening region (120, 122) of the limiting element (118) is arranged.

3. Manually guided ground-working appliance according to Claim 2, **characterized in that** the first fastening region (120) is arranged in the fixing housing (54) of the fixing unit (40) and the second fastening region (122) is arranged in the housing (12) of the ground-working appliance (10).

4. Manually guided ground-working appliance according to one of the preceding claims, **characterized in that** the limiting element (118) is at least partially guided in a groove (132) in the first fastening region (120) and/or a groove (128) in the second fastening region (122).

5. Manually guided ground-working appliance according to Claim 4, **characterized in that** the limiting element (118) is guided in the groove (132) in the first fastening region (120) and/or in the groove (128) in the second fastening region (132) in some sections perpendicularly to the telescopic direction (60).

6. Manually guided ground-working appliance according to either of Claims 4 or 5, **characterized in that** the limiting element (118) is guided in the groove (132) in the first fastening region (120) and/or in the groove (128) in the second fastening region (122) in some sections in a U- or S-shaped manner.

7. Manually guided ground-working appliance according to one of the preceding claims, **characterized in that** the first fastening region (120) and/or the second fastening region (122) has at least one force-fitting element (130, 134) for the force-fitting fastening, in particular for the clamping fastening, of the limiting element (118).

8. Manually guided ground-working appliance according to one of the preceding claims, **characterized in that** the limiting element (118) is reinforced in some sections, in particular is reinforced in some sections between the first fastening region (120) and the second fastening region (122).

9. Manually guided ground-working appliance according to one of the preceding claims, **characterized in that** the limiting element (118) is designed as a cable element (30) for connecting an electronics unit (16) of the ground-working appliance (10) to the switching unit (28) of the first guide member (22).

## Revendications

1. Outil de travail du sol à guidage manuel, notamment tondeuse à gazon, avec un boîtier (12) et avec un dispositif de guidage (20), le dispositif de guidage (20) présentant deux organes de guidage (22, 24) guidés l'un dans l'autre de manière télescopique, le premier organe de guidage (22) présentant une poignée (26) comprenant une unité de commutation (28) et le deuxième organe de guidage (24) étant relié au boîtier (12), un mouvement du premier organe de guidage (22) à l'encontre d'une direction télescopique (60) étant limité par l'intermédiaire d'un élément de limitation (118) et une hauteur maximale du dispositif de guidage (20) pouvant être réglée par l'intermédiaire de l'élément de limitation (118),
**caractérisé en ce que**
l'élément de limitation (118) est fixé par l'intermédiaire d'au moins une première zone de fixation (120) au premier organe de guidage (22) et par l'intermédiaire d'au moins une deuxième zone de fixation (124) au deuxième organe de guidage (24) et/ou au boîtier (12), l'élément de limitation (118) étant réalisé sous la forme d'un élément de câble flexible (30).

2. Outil de travail du sol à guidage manuel selon la revendication 1, **caractérisé en ce que** l'organe de guidage (20) présente une unité de fixation (40) pour fixer de manière amovible les organes de guidage (22, 24) l'un à l'autre, l'unité de fixation (40) comprenant un boîtier de fixation (54) dans lequel la première ou la deuxième zone de fixation (120, 122) de l'élément de limitation (118) est agencée.

3. Outil de travail du sol à guidage manuel selon la revendication 2, **caractérisé en ce que** la première zone de fixation (120) est agencée dans le boîtier de fixation (54) de l'unité de fixation (40) et la deuxième zone de fixation (122) est agencée dans le boîtier (12) de l'outil de travail du sol (10).

4. Outil de travail du sol à guidage manuel selon l'une quelconque des revendications précédentes, **caractérisé en ce que** l'élément de limitation (118) est guidé au moins partiellement dans une rainure (132) dans la première zone de fixation (120) et/ou une rainure (128) dans la deuxième zone de fixation (122).

5. Outil de travail du sol à guidage manuel selon la revendication 4, **caractérisé en ce que** l'élément de limitation (118) est guidé dans la rainure (132) dans la première zone de fixation (120) et/ou dans la rainure (128) dans la deuxième zone de fixation (132) par sections perpendiculairement à la direction télescopique (60).

6. Outil de travail du sol à guidage manuel selon l'une quelconque des revendications 4 à 5, **caractérisé en ce que** l'élément de limitation (118) est guidé dans la rainure (132) dans la première zone de fixation (120) et/ou dans la rainure (128) dans la deuxième zone de fixation (122) par sections en forme de U ou de S.

7. Outil de travail du sol à guidage manuel selon l'une quelconque des revendications précédentes, **caractérisé en ce que** la première zone de fixation (120) et/ou la deuxième zone de fixation (122) présente au moins un élément d'adhérence (130, 134) pour la fixation par adhérence, notamment pour la fixation par serrage, de l'élément de limitation (118).

8. Outil de travail du sol à guidage manuel selon l'une quelconque des revendications précédentes, **caractérisé en ce que** l'élément de limitation (118) est renforcé par sections, notamment est renforcé par sections entre la première zone de fixation (120) et la deuxième zone de fixation (122).

9. Outil de travail du sol à guidage manuel selon l'une quelconque des revendications précédentes, **caractérisé en ce que** l'élément de limitation (118) est réalisé sous la forme d'un élément de câble (30) pour relier une électronique (16) de l'outil de travail du sol (10) à l'unité de commutation (28) du premier organe de guidage (22).
